# EUROPEAN PATENT APPLICATION

(11) **EP 4 718 043 A1**
(43) Date of publication of application: **01.04.2026**
(21) Application number: 25816060.5
(22) Date of filing: 19.05.2025
(51) Int. Cl.: G01J 3/28, G01J 3/02

(54) **HYPERSPECTRAL OPTICAL SYSTEM AND AUTO-FOCUSING METHOD USING SAME**

(30) Priority: 28.05.2024 KR 20240069400
(71) Applicant: LG Energy Solution, Ltd., Seoul 07335 (KR)
(72) Inventor: GU, Jaejin, Daejeon 34122 (KR)
(74) Representative: Goddar, Heinz J.
(86) International application number: PCT/KR2025/006762
(87) International publication number: WO 2025/249817

(57) **Abstract**

One aspect of the present disclosure relates to a hyperspectral optical device and an auto focusing method using the same, and more particularly, to dividing a shooting target of a hyperspectral optical device into a plurality of individual regions, selecting a plurality of depths of field (DOFs) for the shooting target, and combining images captured at each DOF for correction, whereby focus blur caused by non-uniform DOF of the shooting target may be improved in images captured by the hyperspectral optical device.

## Description

### Cross-References to Related Applications

This application claims the benefit of priority based on Korean Patent Application No. 10-2024-0069400 filed on May 28, 2024.

### TECHNICAL FIELD

The present disclosure relates to a hyperspectral optical system and an auto focusing method using the same.

### BACKGROUND ART

'Hyperspectral' refers to a technology that divides light into about 200 wavelengths in the visible light and near-infrared regions, unlike general images that only distinguish the three primary colors of light. While the human eye mainly sees visible light colors in three bands, hyperspectral imaging technology can divide the spectrum into more bands.

Therefore, hyperspectral optical devices such as hyperspectral cameras or hyperspectral sensors with hyperspectral imaging technology have a large number of detection wavelength bands and each wavelength band is narrowly subdivided, allowing more information to be obtained from images captured using them. Research on utilizing hyperspectral imaging technology has been ongoing recently.

However, there is a problem that, when a shooting target is uneven and the depth of field (DOF) is non-uniform in the Z-axis direction, focus blur occurs in images captured by currently commercialized hyperspectral optical devices. The Z-axis direction refers to the DOF or thickness direction.

Therefore, there is a need to develop technology that prevents focus blur from occurring in images captured by the hyperspectral optical devices even when the shooting target is uneven and the DOF is non-uniform in the Z-axis direction.

### [Prior Art Document]

### [Patent Document]

(Patent Document 1) US Patent Publication No. 2020-0200606

### DISCLOSURE

### TECHNICAL PROBLEM

The inventors of the present invention conducted multifaceted research to solve the above problems and found that when introducing an auto focusing technology that selects a plurality of depths of field (DOFs) for the shooting target of a hyperspectral optical system, and then combines images captured at each depth of field (DOF) to provide correction, the focus blur due to non-uniform DOF of the shooting target was improved in images captured by the hyperspectral optical system.

Therefore, an objective of one aspect of the present disclosure is to provide a hyperspectral optical system that can provide images with improved focus blur.

Another objective of one aspect of the present disclosure is to provide an auto focusing method using the hyperspectral optical system.

### TECHNICAL SOLUTION

To achieve the above objectives, one aspect of the present disclosure provides a hyperspectral optical system, comprising:
(a) a view finder imaging unit that divides a shooting target into a plurality of individual regions, and then captures depth of field (DOF)-specific images of the shooting target comprising the individual regions using a view finder;
(b) a representative depth of field (DOF) derivation unit for individual regions of the shooting target that calculates the focus for each of the captured DOF-specific view finder images and selects a DOF corresponding to a view finder image with excellent focus as a representative DOF for each individual region;
(c) a hyperspectral image capturing unit that captures the individual regions corresponding to the selected representative DOF with a hyperspectral CCD (Charge Coupled Device); and
(d) an image correction unit that combines the hyperspectral images of the individual regions corresponding to the representative DOF captured by the hyperspectral CCD to correct focus blur caused by non-uniform DOF of the shooting target.

In an embodiment of one aspect of the present disclosure, the shooting target may be divided into 5 to 20 individual regions.

In an embodiment of one aspect of the present disclosure, 3 to 10 DOF-specific images may be captured for each individual region.

In an embodiment of one aspect of the present disclosure, in the (b) representative DOF derivation unit for individual regions of the shooting target, the focus may be calculated in the view finder.

One aspect of the present disclosure also provides an auto focusing method using a hyperspectral optical system, comprising: (A) a view finder imaging step of dividing a shooting target into a plurality of individual regions, and then capturing depth of field (DOF)-specific images of the individual regions using a view finder;
(B) a representative depth of field (DOF) derivation step for individual regions of the shooting target that calculates the focus for each of the DOF-specific images of each individual region captured and selects a DOF corresponding to the calculated focus as a representative DOF for each individual region;
(C) a hyperspectral image capturing step of repeatedly capturing the individual regions corresponding to the selected representative DOF with a hyperspectral CCD (Charge Coupled Device); and
(D) an image correction step of combining the hyperspectral images of the individual regions corresponding to the representative DOF captured by the hyperspectral CCD to correct focus blur caused by non-uniform DOF of the shooting target.

In an embodiment of one aspect of the present disclosure, the shooting target may be divided into 5 to 20 individual regions.

In an embodiment of one aspect of the present disclosure, 3 to 10 DOF-specific images may be captured for each individual region.

In an embodiment of one aspect of the present disclosure, in the step (B), the focus may be calculated in the view finder.

### EFFECT OF THE INVENTION

According to one aspect of the present disclosure, even if the DOF of the shooting target of the hyperspectral optical system is non-uniform in the thickness or depth direction, there is an effect of providing images with improved focus blur by auto focusing technology.

### BRIEF DESCRIPTION OF THE DRAWINGS

FIG. 1a is a schematic diagram showing a view finder imaging unit of a hyperspectral optical system capturing individual regions of a shooting target using a view finder, and FIG. 1b shows depth of field (DOF)-specific view finder image data of individual regions captured by the view finder.
FIG. 2a shows the division of DOF-specific individual regions of the shooting target, and FIG. 2b shows a graph for selecting a representative depth of field (DOF) for a corresponding individual region using the focus of a view finder image for the individual region at a specific depth.
FIG. 3a is a schematic diagram showing repeated capture of individual regions by Path according to the representative DOF using a hyperspectral CCD, and FIG. 3b shows hyperspectral CCD images (Scanned Image) captured by Path.
FIG. 4a shows a process of combining corrected images for each Path, and FIG. 4b shows a corrected hyperspectral CCD image obtained by combining the corrected images for each Path.
FIG. 5 shows an image captured by a hyperspectral optical system with auto focusing technology applied according to a preferred embodiment of the invention.
FIG. 6 shows an image captured by a conventional hyperspectral optical system without auto focusing technology applied.

### BEST MODE FOR CARRYING OUT THE INVENTION

Hereinafter, the present invention is described in more detail to aid in understanding the present invention.

The terms or words used in this specification and claims should not be interpreted as being limited to common or dictionary meanings, but should be interpreted based on the principle that the inventor can appropriately define the concepts of terms to best explain his invention, in line with the technical concept of the present invention.

The term "HYPERSPECTRAL OPTICAL SYSTEM" used in this specification refers to an optical system including a hyperspectral CCD (Charge Coupled Device), and the hyperspectral optical system may also be understood as a hyperspectral CCD with an auto focusing function.

The term "AUTO FOCUSING" used in this specification refers to a technology that selects a plurality of depths of field (DOFs) for the shooting target of a hyperspectral optical device, captures images of the shooting target corresponding to each of these depths, and then combines them to improve the focus blur phenomenon caused by DOF differences.

The term "Z-axis" used in this specification may refer to the depth or thickness direction of an arbitrary object, and in particular, may refer to the depth or thickness direction of the shooting target.

### HYPERSPECTRAL OPTICAL DEVICE

One aspect of the present disclosure relates to a hyperspectral optical device.

The hyperspectral optical device according to one aspect of the present disclosure includes, (a) a view finder imaging unit that divides a shooting target into a plurality of individual regions, and then captures DOF-specific images of the shooting target including the individual regions using a view finder;
(b) a representative depth of field (DOF) derivation unit for individual regions of the shooting target that calculates the focus for each of the captured DOF-specific view finder images and selects a DOF corresponding to a view finder image with excellent focus as a representative DOF for each individual region;
(c) a hyperspectral image capturing unit that captures the individual regions corresponding to the selected representative DOF with a hyperspectral CCD (Charge Coupled Device); and
(d) an image correction unit that combines the hyperspectral images of the individual regions corresponding to the representative DOF captured by the hyperspectral CCD to correct focus blur caused by non-uniform DOF of the shooting target.

By performing auto focusing according to the above (a) to (d), it is possible to prevent focus blur in images captured by the hyperspectral optical system.

In the hyperspectral optical system of one aspect of the present disclosure, the (a) view finder imaging unit may divide the shooting target into a plurality of individual regions, and then capture DOF-specific images of the shooting target including the individual regions using a view finder.

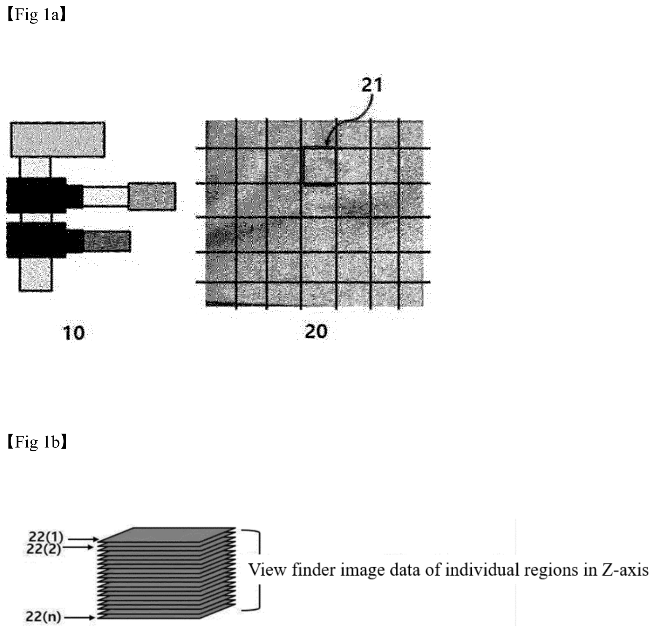

FIG. 1a is a schematic diagram showing a view finder imaging unit of a hyperspectral optical system capturing individual regions of a shooting target using a view finder, and FIG. 1b shows depth of field (DOF)-specific view finder image data of individual regions captured by the view finder.

Referring to FIG. 1a and FIG. 1b, after dividing the shooting target 20 into a plurality of individual regions 21, the shooting target 20 including the plurality of individual regions 21 may be captured using the view finder 10. The DOF may vary for each individual region 21 in the shooting target 20. View finder images 22 of the shooting target 20 including each individual region 21 may be captured, and by capturing the shooting target 20 including the individual regions 21 at a plurality of depths of field (DOFs), DOF-specific view finder images 22 of the individual regions 21 may be obtained. For example, by dividing the DOFs into 1 to n, view finder images from the first DOF view finder image 22(1) to the nth DOF view finder image 22(n) may be obtained. From this, accumulated view finder image data accumulating 1 to n DOF-specific view finder images 22(1) to 22(n) may be obtained.

The view finder refers to a device that allows the photographer to check the camera's line of sight rather than the photographer's line of sight. It refers to a camera device for framing the photograph to be taken and for more accurately focusing on the shooting target. Generally, a view finder may be used for measuring position (X/Y axis) exploration purposes, or for calculating the focus of an image captured at a specific DOF (Z-axis).

The view finder is not particularly limited as long as it is conventionally used in the art, and for example, both optical and electronic view finders may be used.

An optical view finder is called an OVF (Optical View Finder), and an electronic view finder is called an EVF (Electronic View Finder). The difference between OVF and EVF can be said to be the use of lenses.

The optical view finder (OVF) is designed to use a prism to reflect light entering through the lens so that users can see it straight. SLR film cameras allow the photographer to preview the captured photo through the OVF and press the shutter button to take the picture. As the image from light is transmitted directly through the OVF, it has the advantage of delivering a clearer image, an image as it is.

The electronic view finder (EVF) upgrades the portability of the camera by reducing the space occupied by the view finder device compared to OVF. EVF electronically processes the light that passes through the lens and touches the image sensor, then data-processes this information and displays the processed image on a small screen. And this screen is checked through the view finder.

In the hyperspectral optical system of one aspect of the present disclosure, in the (b) representative depth of field (DOF) derivation unit for individual regions of the shooting target, the focus for each of the captured DOF-specific view finder images may be calculated and a DOF corresponding to a view finder image with excellent focus may be selected as a representative DOF for each individual region.

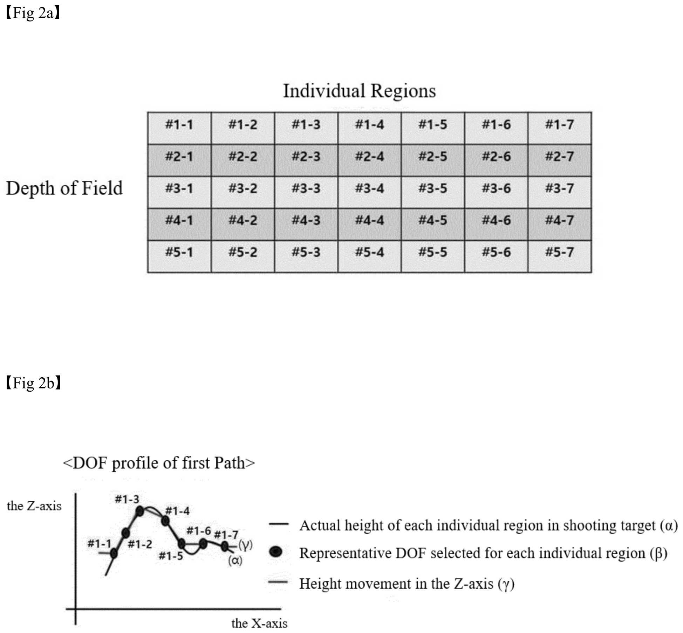

FIG. 2a shows the division of DOF-specific individual regions of the shooting target, and FIG. 2b shows a graph for selecting a representative DOF for a corresponding individual region using the focus of a view finder image for the individual region at a specific DOF. In that case, since a representative DOF is selected after capturing the shooting target including the individual regions at a plurality of DOFs, the capture procedure progressing at each DOF may be referred to as a path. Referring to FIG. 2a, as a preferred embodiment, individual regions may be divided into 7, and DOFs may be divided into 5. For example, the first individual region at 5 DOFs including the first DOF to the fifth DOF may be expressed as #1-1, #2-1, #3-1, #4-1, and #5-1, respectively, and the second individual region may be expressed as #1-2, #2-2, #3-2, #4-2, and #5-2. The third individual region to the seventh individual region may also be expressed in the same way at 5 DOFs. Accordingly, the capture procedures progressing at the first DOF to the fifth DOF may be referred to as the first path to the fifth path, respectively.

The degree of focus for each individual region thus divided may be calculated in the view finder. A conventional view finder in the art can calculate the DOFs of the captured image. For example, the focus may be calculated by the size of pixel intensity dispersion in the image captured by the view finder. If the view finder image is clear with good black and white distinction, the view finder pixel intensity dispersion appears large, meaning the focus is good.

Referring to FIG. 2b, as a preferred embodiment, a graph showing the actual height (α) of each individual region in the shooting target and the representative DOF (β, Z-axis) selected for each individual region may be obtained.

As the representative DOF (β) for each individual region is selected, it can be seen that when the representative DOFs (β) for each individual region are linked, there is a height movement in the Z-axis (γ) to the representative DOFs from an unfocused state.

In the hyperspectral optical system of one aspect of the present disclosure, the (c) hyperspectral image capturing unit may capture the shooting target including the individual regions corresponding to the selected representative DOFs with a hyperspectral CCD (Charge Coupled Device).

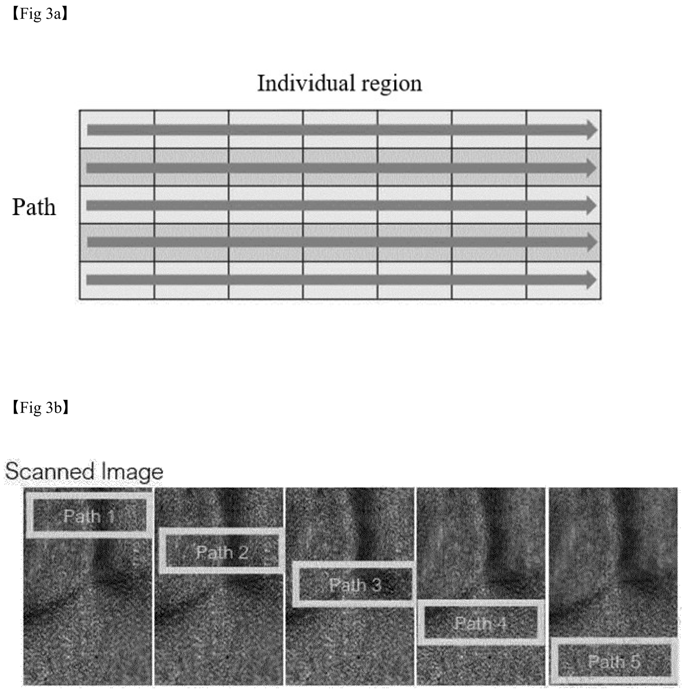

FIG. 3a is a schematic diagram showing the capture of the shooting target including individual regions by Path according to the representative DOFs using a hyperspectral CCD, and FIG. 3b shows hyperspectral CCD images (Scanned Image) captured by Path.

In that case, the capture using the hyperspectral CCD may be performed by line scan. For example, line scan captures may be performed by Path according to the representative DOF selected for each individual region.

In the hyperspectral optical system of one aspect of the present disclosure, the (d) image correction unit may combine the hyperspectral CCD images of the individual regions corresponding to the representative DOFs captured by the hyperspectral CCD to correct focus blur caused by non-uniform DOFs of the shooting target.

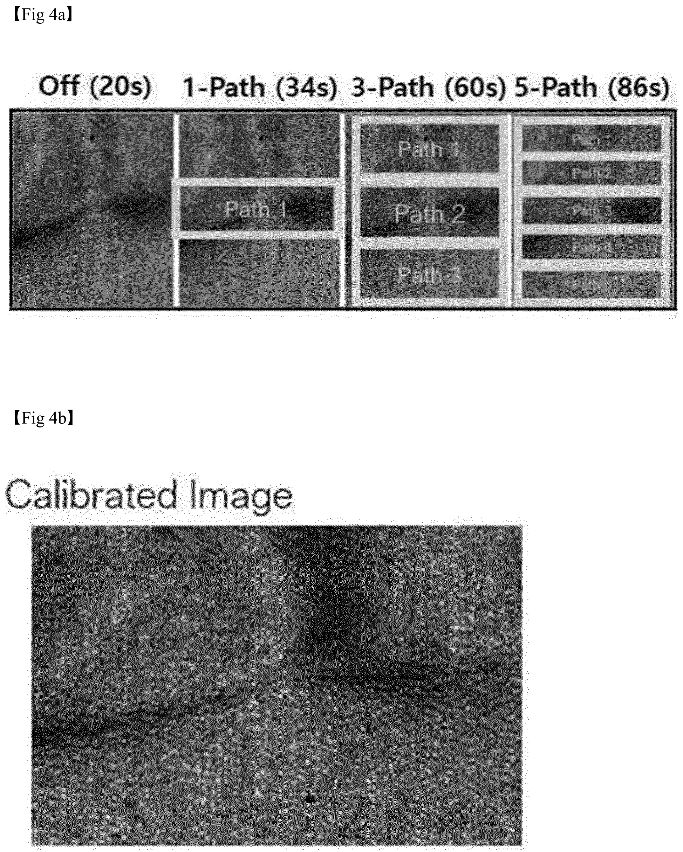

FIG. 4a shows a process of combining corrected images for each Path, and FIG. 4b shows a corrected hyperspectral CCD image obtained by combining the corrected images for each Path.

The hyperspectral CCD images captured for each path may be combined by an image correction software program to correct focus blur caused by non-uniform DOFs of the shooting target. The image correction software program is not particularly limited as long as it is a program that operates with logic to correct focus blur of images by combining a plurality of images.

Referring to FIG. 4a, the hyperspectral CCD images captured for each path may be combined with an image correction software program.

First, the hyperspectral CCD image captured by 1-path may be combined with images captured by 2-path and 3-path, and then combined with images captured by 4-path and 5-path to combine the entire image.

Referring to FIG. 4b, a final corrected hyperspectral CCD image may be obtained by combining these images captured according to the paths.

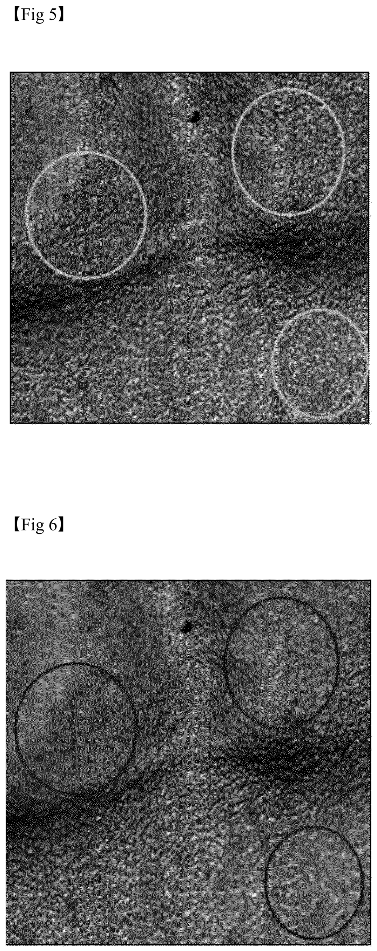

FIG. 5 shows an image captured by a hyperspectral optical system with auto focusing technology applied according to a preferred embodiment of one aspect of the present disclosure, and FIG. 6 shows an image captured by a conventional hyperspectral optical system (Hyper Spectral Camera, Mitutoyo) without auto focusing technology applied.

In that case, the shooting target is not particularly limited, but for example, if the DOF of the shooting target is non-uniform, the effect of improving focus blur by auto focusing may be better confirmed.

It can be seen that in FIG. 5, where auto focusing technology was applied to the hyperspectral system, no focus blur was observed, but in FIG. 6, which was captured by a conventional hyperspectral CCD without auto focusing technology applied, focus blur was observed.

### AUTO FOCUSING METHOD USING HYPERSPECTRAL OPTICAL SYSTEM

One aspect of the present disclosure also relates to an auto focusing method using the hyperspectral optical system as described above.
(A) a view finder imaging step of dividing a shooting target into a plurality of individual regions, and then capturing DOF-specific images of the individual regions using a view finder;
(B) a representative depth of field (DOF) derivation step for individual regions of the shooting target that calculates the focus for each of the DOF-specific images of each individual region captured and selects a DOF corresponding to a view finder image with excellent focus as a representative DOF for each individual region;
(C) a hyperspectral image capturing step of capturing the individual regions corresponding to the selected representative DOF with a hyperspectral CCD (Charge Coupled Device); and
(D) an image correction step of combining the hyperspectral images of the individual regions corresponding to the representative DOF captured by the hyperspectral CCD to correct focus blur caused by non-uniform DOF of the shooting target.

Although the present invention has been described by limited embodiments and drawings, the present invention is not limited to this, and various modifications and variations are possible by those skilled in the art to which the present invention pertains within the technical concept of the present invention and the equivalent scope of the claims to be described below.

### DESCRIPTION OF REFERENCE NUMERALS

10: view finder
20: shooting target
21: individual region
22: view finder image
22(n): view finder image at the nth DOF

## Claims

1. A hyperspectral optical system comprising:
(a) a view finder imaging unit that divides a shooting target into a plurality of individual regions, and then captures depth of field (DOF)-specific images of the shooting target comprising the individual regions using a view finder;
(b) a representative depth of field (DOF) derivation unit for individual regions of the shooting target that calculates a focus for each of the captured DOF-specific view finder images and selects a DOF corresponding to a view finder image with excellent focus as a representative DOF for each individual region;
(c) a hyperspectral image capturing unit that captures the individual regions corresponding to the selected representative DOF using a hyperspectral CCD (Charge Coupled Device); and
(d) an image correction unit that combines the hyperspectral images of the individual regions corresponding to the representative DOF captured by the hyperspectral CCD to correct focus blur caused by non-uniform DOF of the shooting target.

2. The hyperspectral optical system according to claim 1,
wherein the shooting target is divided into 5 to 20 individual regions.

3. The hyperspectral optical system according to claim 1,
wherein 3 to 10 DOF-specific images are captured for each individual region.

4. The hyperspectral optical system according to claim 1,
wherein in the (b) representative DOF derivation unit for individual regions of the shooting target, the focus is calculated in the view finder.

5. An auto focusing method using a hyperspectral optical system, comprising:
(A) a view finder imaging step of dividing a shooting target into a plurality of individual regions, and then capturing depth of field (DOF)-specific images of the individual regions using a view finder;
(B) a representative depth of field (DOF) derivation step for individual regions of the shooting target that calculates the focus for each of the DOF-specific images of each individual region captured and selects a DOF corresponding to a view finder image with excellent focus as a representative DOF for each individual region;
(C) a hyperspectral image capturing step of capturing the individual regions corresponding to the selected representative DOF with a hyperspectral CCD (Charge Coupled Device); and
(D) an image correction step of combining the hyperspectral images of the individual regions corresponding to the representative DOF captured by the hyperspectral CCD to correct focus blur caused by non-uniform DOF of the shooting target.

6. The auto focusing method using a hyperspectral optical system according to claim 5, wherein the shooting target is divided into 5 to 20 individual regions.

7. The auto focusing method using a hyperspectral optical system according to claim 5, wherein 3 to 10 DOF-specific images are captured for each individual region.

8. The auto focusing method using a hyperspectral optical system according to claim 5,
wherein in the step (B), the focus is calculated in the view finder.
